**Europäisches Patentamt**

**European Patent Office**

**Office européen des brevets**

(19)

(11) Veröffentlichungsnummer: **0 247 429 B1**

(12) **EUROPÄISCHE PATENTSCHRIFT**

(45) Veröffentlichungstag der Patentschrift: **23.10.91**

(51) Int. Cl.⁵: **C08L 67/06**, //(C08L67/06, 75:06)

(21) Anmeldenummer: **87106838.3**

(22) Anmeldetag: **12.05.87**

Die Akte enthält technische Angaben, die nach dem Eingang der Anmeldung eingereicht wurden und die nicht in dieser Patentschrift enthalten sind.

(54) **Verfahren zur Herstellung schrumpfarmer Formkörper auf Polyesterbasis.**

(30) Priorität: **24.05.86 DE 3617514**

(43) Veröffentlichungstag der Anmeldung:
**02.12.87 Patentblatt 87/49**

(45) Bekanntmachung des Hinweises auf die Patenterteilung:
**23.10.91 Patentblatt 91/43**

(84) Benannte Vertragsstaaten:
**AT DE FR GB IT**

(56) Entgegenhaltungen:
**EP-A- 0 074 746
US-A- 4 535 110**

**CHEMICAL ABSTRACTS, Band 85, Nr. 18, 1. November 1976, Seite 55, Zusammenfassung Nr. 125133g, Columbus, Ohio, US; & JP-A-76 47 089 (UBE INDUSTRIES, LTD) 22-04-1976**

**CHEMICAL ABSTRACTS, Band 77, Nr. 20, 13. November 1972, Seite 27, Zusammenfassung Nr. 127435r, Columbus, Ohio, US; & JP-A-72 19 696 (TAKEDA CHEMICAL INDUSTRIES, LTD) 05-06-1972**

**R. Vieweg, L. Goerden, Kunststoff-Handbuch B VIII (Polyester) s. 300 und 307, Carl Hanser Verlag 1973**

(73) Patentinhaber: **STAMICARBON B.V.**
**P.O. Box 605
NL-6160 AP Geleen(NL)**

(72) Erfinder: **Brassat, Bert, Dr.
Bodelschwinghstrasse 30
W-4150 Krefeld(DE)**
Erfinder: **Hess, Bernhard, Dr.
Kaldenhausener Strasse 84
W-4130 Moers 2(DE)**
Erfinder: **Walter, Oskar
Buscher Holzweg 16
W-4150 Krefeld(DE)**
Erfinder: **Jacobs, Raymund
Hinter Sollbrueggen 53
W-4150 Krefeld(DE)**
Erfinder: **Knabenreich, Jürgen
Marienburger Strasse 9
W-4150 Krefeld(DE)**

## Beschreibung

Die Erfindung betrifft ein Verfahren zur Herstellung schrumpf- und verzugsarmer Formkörper durch Härtung von Formmassen auf Basis ungesättigter Polyesterharze, d.h. Mischungen α,β-ethylenisch ungesättigter Polyester und damit copolymerisierbarer Monomerer, bei niedriger Temperatur.

Formmassen auf Basis ungesättigter Polyesterharze mit Zusätzen von Verstärkungsmitteln, wie Glasfasern, und gegebenenfalls Füllstoffen ergeben bei der Härtung Formteile mit hoher Festigkeit, Steifheit, Wärmeformbeständigkeit und Resistenz gegen Lösemittel und andere Chemikalien. Sie sind daher wertvolle Konstruktionwerkstoffe. Um aus ihnen Teile herstellen zu können, die frei von Einfallstellen, Verzugserscheinungen, inneren Spannungen und Oberflächenwelligkeit sind, setzt man ihnen schrumpfmindernde Additive - sogenannte Low-Profile (LP)-Additive - zu. Bekannte LP-Additive sind u.a. thermoplastische hochmolekulare Polymere (DE-PS 1 694 857), z.B. Polymerisate von Acryl- und Methacrylsäureestern wie Polymethylmethacrylat und Polyethylacrylat, Homo- und Copolymerisate von Vinylverbindungen wie Polystyrol und Polyvinylacetat, Celluloseester wie Celluloseacetat-propionat und -butyrat, wobei die Molekulargewichte zwischen 10.000 und 10.000.000 liegen können. Auch Substanzen mit geringerem Molekulargewicht, die bei Raumtemperatur flüssig bis harzartig und deshalb keine "Thermoplasten" im klassischen Sinne sind, sondern den Charakter von Weichmachern haben, sind als LP-Additive empohlen worden (AT-PS 220 369), so z.B. Dibutylphthalat und Polypropylenadipat. Außerdem sind Kombinationen von LP-Additiven aus beiden Stoffgruppen als vorteilhalft beschrieben worden (DE-OS 3 426 425).

Die Kombination mit LP-Additiven der beschriebneen Art führt nicht bei allen Polyesterharzen zu einem Effekt gleicher Größe: Formkörper mit optimaler Schrumpfkompensation ließen sich bislang nur unter Verwendung von Polyestern mit sehr hoher Ungesättigtheit herstellen (R. Rabenold, 27th SPI-Conference 1972, Section 15-E, S.2). Zur Herstellung solcher Formmassen werden Polyester mit Molekulargewichtsfaktoren (definiert als Molmassenanteil des Polyesters pro polymerisierbarer Doppelbindung) von höchstens 186 (DE-PS 1 694 857) bzw. von höchstens 215 (DE-PS 1 953 062) empfohlen.

LP-Systeme der beschriebenen Art haben sich bisher nur im Bereich hoch gefüllter Formmassen durchgesetzt. Ein optimales LP-Verhalten erreichen sie in Kombination mit Füll stoffen im Gewichtsverhältnis (Füllstoff: Harz) oberhalb 1:1; Gewichtverhältnisse von 1,5:1 sind üblich, solche von 2:1 und höher durchaus nicht ungewöhnlich.

LP-Formmassen auf Polyesterbasis werden üblicherweise bei erhöhtem Druck verarbeitet. Typische Druckwerte liegen bei ca. 100 kp/cm² (DE-AS 2 609 207); als infrage kommender Druckbereich werden z.B. 50 bis 150 kp/cm² genannt (DE-OS 2 163 089). An anderer Stelle wurde behauptet, daß ein wirksamer LP-Effekt nur dann aufträte, wenn die Masse während der Härtung rasch verformt wird (K. Lem, D. Han, J. Polym. Sci. 28 (1983), S. 3207, 3215, 3222). Derartige Verformungen können nur unter Druck erreicht werden; d.h. LP-Polyester-Formmassen müssen nach bisheriger Erkenntnis unter erhöhtem Druck verarbeitet werden. Allerdings nimmt bei sehr hohen Drucken der LP-Effekt wieder ab (Hj. Schulz-Walz, O. Walter, AVK-Jahrestagung 1972, Vorabdruck S. 22-1 ff.).

Die Erzielung einer weitgehenden Schrumpfkompensation ist schließlich auch abhängig von der Temperatur, bei der die Formmasse gehärtet wird. In der Fachliteratur wird als untere Temperaturgrenze 100°C genannt (W. Klöker, O. Walter, Kunststoffberater 10 (1970), S. 959 ff.); typische Formtemperaturen bei der Verarbeitung flächiger (SMC) und teigförmiger (BMC) LP-Polyestermassen liegen jedoch zwischen 130 und 160°C (V.A. Pattison u.a., J. Appl. Polym. Sci. 18 (1974) S. 2764; DE-OS 3 426 425; EP-A 107 031).

Die Notwendigkeit, mit hohen Füllstoffgehalten, bei hoher Formtemperatur und mit hohem Druck zu arbeiten, bedeutet eine schwerwiegende Einschränkung für den Einsatz von LP-Polyester-Formmassen. In vielen Fällen ist die Verarbeitung bei tieferen Temperaturen erwünscht, z.B. dann, wenn in Kunststofformen gearbeitet werden soll, die wirtschaftlicher als Stahlformen sind, bei hohen Temperaturen jedoch keine starken mechanischen Beanspruchungen aushalten. Niedrige Drucke senken die Energiekosten und schonen die Werkzeuge.

Durch Verzicht auf hohe Füllstoffgehalte wäre es schließlich möglich, besonders einfache, bei geringen Stückzahlen wirtschaftlich arbeitende Formgebungsverfahren einzusetzen, die eine niedrige Viskosität des Harzansatzes bei der Verarbeitung erfordern. Zu diesen Verfahren gehören das Naßpreßverfahren und das Harzinjektionsverfahren. Letzteres läßt sich in luftdicht geschlossenen Formen durchführen, was hinsichtlich der Monomeremission von Vorteil ist. Ein weiterer Vorteil dieses Verfahrens ist seine praktisch abfallfreie Arbeitsweise.

Aufgabe der Erfindung war die Herstellung schrumpf- und verzugsarmer Formkörper aus LP-Polyester-Formmassen bei niedrigen Formtemperaturen, wobei Formdrucke von 0 bis 150 bar und Füllstoffgehalte (ohne Verstärkungsmittel) zwischen 0 und 150 Gew.-%, bezogen auf Harz, möglich sein sollten.

Überraschenderweise läßt sich diese Aufgabe dadurch lösen, daß man nicht Polyester mit höchster, sondern mit mittlerer bis hoher Ungesättigtheit auswählt und als LP-Additiv ein Polyesterurethan einsetzt.

Gegenstand der Erfindung ist also ein Verfahren zur Herstellung schrumpf- und verzugsarmer Formkörper durch Härtung von Formmassen auf Basis ungesättigter Polyester, die als Harzkomponente im wesentlichen

A) 20 bis 70 Gew.-% $\alpha,\beta$-ethylenisch ungesättigten Polyester,
B) 20 bis 55 Gew.-% mit A copolymerisierbares Monomer und
C) 8 bis 25 Gew.-% schwundverminderndes Polymer enthalten,

wobei sich die Prozentangaben auf die Summe A + B + C beziehen, dadurch gekennzeichnet, daß der Polyester A einen Molekulargewichtsfaktor von 210 bis 450, vorzugsweise von 235 bis 420, besitzt,

das Polymer C ein Polyesterurethan ohne radikalisch polymerisierbare Doppelbindungen mit 0,05 bis 0,8, vorzugsweise 0,1 bis 0,3, Äquivalenten Urethangruppen pro 100 g Polyesterurethan C ist,

und man die Formmasse bei einer Formtemperatur unter 100° C verarbeitet.

Ungesättigte Polyester A sind vor allem die Umsetzungsprodukte $\alpha,\beta$-ethylenisch ungesättigter Dicarbonsäuren oder ihrer Derivate mit Polyolen. Im Sinne der Erfindung gelten aber als ungesättigte Polyester auch die Ester von Polyolen und $\alpha,\beta$-ethylenisch ungesättigten Monocarbonsäuren.

Bevorzugte ungesättigte Polyester A (1) können nach bekannten Verfahren durch Polykondensation mindestens einer $\alpha,\beta$-ethylenisch ungesättigten Dicarbonsäure mit 4 bis 6 C-Atomen (oder deren esterbildenden Derivaten), gegebenenfalls in Abmischung mit bis zu 200 Mol-%, bezogen auf gesamte Dicarbonsäurenkomponente, einer oder mehreren Dicarbonsäuren mit 4 bis 20 C-Atomen, die keine radikalisch polymerisierbaren Doppelbindungen enthalten (oder deren esterbildenden Derivaten), mit mindestens einem zweiwertigen Alkohol mit 2 bis 30 C-Atomen hergestellt werden.

Bevorzugt zu verwendende ungesättigte Dicarbonsäuren oder ihre Derivate für die Polyesterherstellung sind Maleinsäure oder Maleinsäureanhydrid und Fumarsäure. Verwendet werden können z.B. jedoch auch Mesacon-, Citracon-, Itacon- oder Chlormaleinsäure.

Bevorzugt zu verwendende Dicarbonsäuren, die keine radikalisch polyermisierbaren Doppelbindungen enthalten, sind Phthalsäure, Isophthalsäure, Terephthalsäure, Hexa- und Tetrahydrophthalsäure, Endomethylentetrahydrophthalsäure, Bernsteinsäure, Glutarsäure, Adipinsäure, Sebacinsäure, Trimellithsäure, Hexachlorendomethylentetrahydrophthal säure, Hexachlor- und Hexabromphthalsäure; unter ihren esterbildenden Derivaten sind ihre Ester (insbesondere solche mit niedrig siedenden einwertigen Alkoholen wie Methyloder Ethylalkohol), ferner ihre Säureanhydride und Säurehalogenide zu verstehen.

Bevorzugte zweiwertige Alkohole sind Ethylenglykol, Propandiol-1,2 und Propandiol-1,3, Diethylenglykol, Dipropylenglykol, Butandiol-1,3, Butandiol-1,4, Neopentylglykol, 2-Ethyl-propandiol-1,3, Hexandiol-1,6, (cyclo-)aliphatische Diole wie Perhydrobisphenol A, oxalkylierte Bisphenole, $\beta$-Phenoxy-ethanol.

Weitere bevorzugte Polyester A (2) sind solche, die durch Umsetzen von Acrylsäure oder Methacrylsäure mit Polyolen oder Polyepoxiden mit mindestens zwei Hydroxy- bzw. Epoxygruppen und einem auf die Hydroxy- bzw. Epoxygruppen bezogenen Äquivalentgewicht von mindestens 130, bevorzugt mindestens 150, zugänglich sind. Derartige Polyester sind z.B. Bisphenol-A-di-(3-acryloyloxy-2-hydroxy-propyl)-ether und die analoge von der Methacrylsäure abgeleitete Verbindung, ferner die Acryl- und Metalcrylsäureester des Perhydrobisphenols A, des ethoxylierten Bisphenols A, des propoxylierten Bisphenols A, der 2:1-Addukte aus aliphatischen Diolen mit Diisocyanaten, so aus Ethylenglykol oder Propandiol-1,2 mit Hexamethylendiisocyanat, Diphenylmethandiisocyanat, Toluylendiisocyanat, dimerisiertem Toluylendiisocyanat, Naphthylen-1,5-diisocyanat. Weitere Polyester dieser Art sind Ester der Methacryl- oder Acryl säure mit Polyolen, die durch Additionsreaktion von Tri-oder höheren Isocyanaten mit je einem Mol Ethylen- oder Propylenglykol pro Isocyanatgruppe herstellbar sind.

Besonders bevorzugt unter den Polyestern dieser Klasse sind Bisphenol-A-di-(3-methacryloyloxy-2-hydroxy-propyl)-ether, Bisphenol-A-di(2-methacryloyloxy-ethyl-)ether; 4.4'-Di-aminodiphenylmethan-N.N'-dicarbonsäure-di-($\beta$-methacryloyloxy-ethyl)-ester, 4,4'-Diaminodiphenylmethan-N,N'-dicarbonsäure-di-($\beta$-methacryloyloxy-propyl)-ester.

Die Säurezahl der Polyester A kann zwischen 0 und 100, bevorzugt zwischen 0 und 50 liegen, die OH-Zahl zwischen 0 und 150.

Die mittleren Molekulargewichte $\overline{M}_n$ der Polyester A werden in der Regel, soweit es sich um Typ (1) handelt (siehe oben), zwischen ca. 500 und 5.000, vorzugsweise zwischen ca. 1.000 und 3.000 liegen (dampfdruckosmometrisch gemessen in Dioxan und Aceton; bei differierenden Werten wird der niedrigere Wert als der korrekte angesehen).

Der Molekulargewichtsfaktor im Sinne der vorliegenden Erfindung ist der Molmassenanteil des Polesters A pro radikalisch polymerisierbare $\alpha,\beta$-ethylenische Doppelbindung des Polyesters A. Der Doppelbindungsgehalt läßt sich analytisch durch Mercaptananlagerung gemäß Organic Analysis, Bd. III, Seite 315, New York-London 1956, bestimmen. Der Molekulargewichtsfaktor gibt in diesem Fall also an, an wieviel Gramm Polyester sich 1 Mol Mercaptan anlagert. Lagern sich also z.B. an 10 g Polyester 0,05 Mol Mercaptan an, so beträgt der Molekulargewichtsfaktor dieses Polyesters 10:0,05 = 200.

Als bevorzugte copolymerisierbare Vinyl- und Vinylidenverbindungen B im Sinne der Erfindung eignen sich in der Polyestertechnologie gebräuchliche ungesättigte Verbindungen, die bevorzugt $\alpha$-substituierte Vinylgruppen oder $\beta$-substituierte Allylgruppen tragen, insbesondere unsubstituiertes Styrol selbst, aber auch beispielsweise kernchlorierte, -alkylierte und -alkenylierte Styrole, wobei die Alkyl- bzw. Alkenylgruppen 1 bis 4 Kohlenstoffatome enthalten können, wie z.B. Vinyltoluol, Divinylbenzol, $\alpha$-Methylstyrol,tert.-Butylstyrole, Chlorstyrole, Allylvinylbenzol; Vinylester von Carbonsäuren mit 2 bis 6 Kohlenstoffatomen, bevorzugt Vinylacetat; Vinylpyridin, Vinylnaphthalin, Vinylcyclohexan; Acrylsäure und Methacrylsäure und ihre Ester mit gesättigten oder ungesättigten Alkoholen mit 1 bis 4 Kohlenstoffatomen wie (Meth)Acrylsäure-methyl-, -ethyl-, -butyl-, -vinyl-, -allyl-, -methallyl- und -vinylester, ferner ihre Amide und Nitrile; Malein-, Citracon-, Mesacon- und Fumarsäure und ihre Halb- und Diester mit 1 bis 4 Kohlenstoffatomen in der Alkholkomponente, ihre (gegebenenfalls substituierten) Halb- und Diamide, ferner cyclische Derivate der Malein-und Citraconsäure wie Maleinsäureanhydrid und cyclische Imide wie N-Methyl-, N-Phenyl- und N-Cyclohexyl-maleinimid; Allylverbindungen wie Allylbenzol und Allylester wie Allylacetat, Diallylphthalat, Diallylisophthalat, Diallylfumarat, Diallylcarbonat, Triallylphosphat, Triallylcyanurat. Besonders bevorzugt sind Styrol und seine Kernsubstitutionsprodukte.

Die Polyesterurethane C können mittlere Molekulargewichte von 1.000 bis 1.000.000, vorzugsweise 2.000 bis 500.000 (bestimmt durch Membranosmose) aufweisen. Die Herstellung kann in bekannter Weise durch Umsetzung einer Polyhydroxyverbindung mit einem Molekulargewicht über 600, gegebenenfalls einer Verbindung mit zwei reaktionsfähigen Wasserstoffatomen und einem Molekulargewicht unter 600, und einem Polyisocyanat erfolgen. Bevorzugte Polyhydroxyverbindungen mit einem Molekulargewicht über 600 sind neben Hydroxylpolyesteramiden insbesondere lineare oder vorwiegend lineare Hydroxylpolyester, wie sie beispielsweise durch Kondensation aus Ethylenglykol, Propandiol-1,2, Propandiol-1,3, Butandiol-1,3, Butandiol-1,4, Neopentylglykol, 2-Ethylpropandiol-1,3, Pentandiol-1,5, Hexandiol-1,6, 2,2-Bis-(hydroxymethyl)-propionsäure und Bernsteinsäure, Adipinsäure, Pimelinsäure, Korksäure, Azelainsäure, Sebacinsäure, Phthalsäure, Isophthalsäure und Terephthalsäure hergestellt werden können. Außer derartigen Hydroxylpolyestern eignen sich auch Hydroxylpolycarbonate, wie sie z.B. durh Kondensation von Hexandiol-1,5 mit Diphenylcarbonat herstellbar sind, sowie Veresterungsprodukte geradkettiger Hydroxyalkan-moncarbonsäuren mit mindestens 5 Kohlenstoffatomen oder die entsprechenden Lactonpolymerisate oder Ricinusöl. Die Polyester werden unter solchen Bedingungen hergestellt, daß ihre Endgruppen zumindest zum überwiegenden Teil aus Hydroxylgruppen bestehen. Außerdem eignen sich auch Hydroxylpolyether wie Poly(-propylenoxid) oder Poly(-tetrahydrofuran) sowie Polythioether wie Polykondensationsprodukte des Thioglykols mit sich selbst oder mit anderen (Thio-)Diolen.

Diese Produkte besitzen im allgemeinen ein mittleres Molekulargewicht von etwa 600 bis 5.000, vorzugsweise von 1.000 bis 2.500. An Verbindungen mit mindestens zwei mit Isocyanaten reaktionsfähigen Wasserstoffatomen und einem Molekulargewicht unter 600 (Kettenverlängerer) seien neben Wasser oder einfachen Glykolen, z.B. Ethylenglykol, Propandiol-1,3, Butandiol-1,4, Pentandiol-1,5 oder Hexandiol-1,6 auch Glykole mit Harnstoff-, Urethan-, Carbonamid- und Estergruppierungen sowie solche mit tertiären Stickstoffatomen genannt. Auch auf die Möglichkeit der Verwendung von Glykolen mit aromatischen Ringsystemen, beispielsweise Hydrochinon-bis-($\beta$-hydroxy-ethylether) sei hingewiesen. Weiterhin sind auch Diamine wie 3,3'-Dichlor-4,4'-diaminodiphenylmethan ebenso geeignet wie z.B. Hydrazin, Aminoalkohole, Amino-oder Hydroxycarbonsäuren wie 2,2-Bis-(hydroxypropyl)-propionsäure.

Bevorzugte Polyisocyanate sind aliphatische, cycloaliphatische, araliphatische oder aromatische Diisocyanate mit 4 bis 30 C-Atomen, z.B. 1,4-Butandiisocyanat, 1,6-Hexandiisocyanat, 1,4-Cyclohexandiisocyanat, 1-Methyl-2,4-diisocyanatocyclohexan, "Isophoron"diisocyanat, 2,4- und 2,6-Toluylendiisocyanat, 4,4'-Diphenylmethandiisocyanat, 4,4'-Diphenylpropandiisocyanat, p-Phenylendiisocyanat, 1,5-Naphthylendiisocyanat, oder Gemische derartiger Diisocyanate. Besonders bevorzugt sind 4,4'-Diphenylmethandiisocyanat, 2,4- und 2,6-Toluylendiisocyanat und deren Gemische.

Für den LP-Effekt der Polyesterurethane C ist es vorteilhaft, wenn sie im Monomer B löslich oder quellbar sind. Auch ein Gehalt an Carboxylgruppen entsprechend einer Säurezahl von 1,5 bis 40 kann von Vorteil sein. Der Einbau solcher Carboxylgruppen kann z.B. durch die Mitverwendung von Hydroxycarbonsäuren, z.B. Dimethylolpropionsäure, bei der Herstellung der Polyesterurethane oder durch Umsetzung eines Hydroxylpolyesterurethans mit einer Dicarbonsäure oder ihrem Derivat, z.B. Phthalsäureanhydrid erfolgen.

Neben den genannten Komponenten A, B und C können die erfindungsgemäß zu verwendenden Formmassen übliche Zusätze in geeigneten Mengen enthalten.

Beispiele üblicher Zusätze sind Polymerisationsinhibitoren in Konzentrationen von 0,0001 bis 1, vorzugsweise 0,001 bis 0,5 Gew.-%, bezogen auf die Summe der Komponenten (A) bis (C). Geeignete Inhibitoren sind z.B. ein- und mehrwertige Phenole wie Hydrochinon, Toluhydrochinon, 4-tert.-Butyl-brenzkatechin, 2,6-Di-tert.-butyl-p-kresol, Naphthohydrochinon, ferner Chinone wie p-Benzochinon, Chloranil, Naphthochinon, ferner Amine, vorzugsweise sekundäre Arylamine und ihre Derivate, Kupfersalze organischer Säuren, Anlagerungsverbindungen von Kupfer(I)-halogenide an Phosphite. Diese und weitere bevorzugte Stabilisatoren sind beschrieben in Houben-Weyl, "Methoden der Organischen Chemie", 4. Aufl., Band XIV/1, S. 433-453, Georg Thieme Verlag, Stuttgart 1961.

Beispiele üblicher Zusätze sind ferner Radikalbildner als Polymerisationsinitiatoren in Konzentrationen von 0,1 bis 3 Gew.-%, bezogen auf die Summe der Komponenten (A) bis (C). Bevorzugte Initiatoren sind Peroxide, insbesondere Diacylperoxide wie Dibenzoylperoxid und Di-p-chlor-benzoyl-peroxid; Peroxyester wie tert.-Butyl-peroxybenzoat, tert.-Butyl-peroctoat, Dicyclohexylperoxydicarbonat; Alkylperoxide wie Bis-(tert.-butyl-peroxy-)butan, Dicumylperoxid, tert.-Butyl-cumyl-peroxid; Hydroperoxide wie Cumolhydroperoxid, tert.-Butyl-hydroperoxid, Cyclohexanonhydroperoxid, Methylethylketonhydroperoxid; Perketale; Ketonperoxide wie Acetylacetonperoxid.

Beispiele üblicher Zusätze sind auch Polymerisationsbeschleuniger, bevorzugt Cobaltverbindungen wie Cobaltoctoat, Vanadiumverbindungen oder tertiäre aromatische Amine wie Dimethylanilin.

Zusätzlich zu den genannten Komponenten können die erfindungsgemäß zu verwendenden Formmassen schwundmindernde Mittel der eingangs beschriebenen Art ("LP-Additive") in Konzentrationen von 1 bis 10, bevorzugt 2 bis 5 Gew.-%, bezogen auf die Summe der Komponenten (A) bis (C), enthalten. Als solche kommen z.B. in Betracht: Polymerisate von Acryl- und Methacrylsäureestern wie Polymethyl(meth)acrylat, Polyethyl(meth)acrylat und Polybutyl(meth)acrylat, Homo- und Copolymerisate von Vinylverbindungen wie Polystyrol und Polyvinylacetat, ferner Celluloseester wie Celluloseacetat-propionat und -butyrat. Unter diesen Substanzen finden Polyvinylacetat und Vinylacetat-Copolymere, insbesondere solche mit ungesättigten Säuren wie beispielsweise Maleinsäure, (Meth)Acrylsäure oder Fumarsäure bevorzugt Verwendung, wobei die sauren Copolymeriste vorzugsweise Säurezahlen zwischen 1,5 und 40 aufweisen.

Ferner können die erfindungsgemäß zu verwendenden Formmassen bis 400 Gew.-%, bevorzugt 30 bis 200 Gew.-%, bezogen auf die Summe der Komponenten (A) bis (C), faserförmige Verstärkungsmaterialien enthalten. Als solche eignen sich z.B. Metall-, Asbest-,Kohlenstoff- und Glasfasern, ferner organische Fasern wie Baumwoll-, Polyamid-, Polyester- und Polyacrylnitrilfasern. Bevorzugt werden Glas-, Kohlenstoff- und Aramidfasern.

Als weitere Bestandteile der erfindungsgemäß zu verwendenden Formmassen können Füllstoffe in Mengen von bis zu 300, bevorzugt bis zu 150 Gew.-%, bezogen auf die Summe der Komponenten (A) bis (C), eingesetzt werden. Als solche kommen z.B. Kreide, Talkum, Quarz- und Schiefermehl, Kaolin, Kalkspat, Dolomit, Glimmer, Schwerspat, Kieselgur, Tonerde, Aluminiumoxidhydrat, Glaskugeln oder Kohlenstaub in Betracht.

Ferner können die erfindungsgemäß zu verwendenden Formmassen Eindickungsmittel wie Erdalkalimetalloxide oder -hydroxide enthalten. Bevorzugt wird Magnesiumoxid in Mengen von 0,05 bis 10, bevorzugt 0,5 bis 5 Gew.-%, bezogen auf die Summe der Komponenten (A) bis (C), eingesetzt.

Übliche weitere Zusatzstoffe für die erfindungsgemäß zu verwendenden Formmassen sind z.B. Pigmente, Farbstoffe, Gleit- und Trennmittel wie Zinkstearat, Flammschutzmittel, UV-Absorber, Wärmestabilisatoren usw.

Die Formmasse der oben beschriebenen Zusammensetzung kann vor Beginn des Formgebungsvorgangs durch Vermischen der Bestandteile in Knetern, Rührwerken, Walzenstühlen o.ä. fertiggestellt werden. Bei einer anderen Verfahrensweise wird ein Teil der Bestandteile vorgemischt und bei der Formgebung mit den übrigen Bestandteilen zusammengeführt.

Die Herstellung der Formkörper erfolgt dadurch, daß man die oben beschriebenen Formmassen formt und aushärtet, wobei die Formgebung vor oder nach Beginn des Härtungsvorgangs, jedoch vor dem Gelieren erfolgt.

Bevorzugte Einsatzweise der Formmassen ist die Herstellung von Harzmatten. Dazu werden die Komponenten der Formmasse, ausgenommen die Verstärkungsfasern, vorgemischt und zum Tränken der flächig - z.B. in Form von Matten, Gelegen oder Geweben - verlegten Verstärkungsfasern verwendet. Die so hergestellte Harzmatte wird - im allgemeinen nach Eindickung - verpreßt oder - gegebenenfalls nach Zerkleinern - in Spritzgießmaschinen verarbeitet.

Bei einer weiteren bevorzugten Verfahrensweise wird die verstärkungsfaserfreie Vormischung auf die in der geöffneten Form als Vorformling, Gelege, Gewebe, Matte o.ä. befindlichen Verstärkungsfasern aufgegossen, und die Form wird anschließend geschlossen ("Naßpreßtechnik").

Bei einer dritten bevorzugten Arbeitsweise liegen die Verstärkungsfasern, eventuell auch ein Teil oder die Gesamtmenge des Füllstoffs, in der geschlossenen Form vor, und die Mischung der übrigen Bestandteile wird durch Anwendung von Druck und/oder Vakuum in die Form hineingefördert ("Injektionstechnik").

Die Härtungsreaktion kann in Gang gebracht werden

- entweder, indem man ein bei Umgebungstemperatur spontan polymerisierendes mindestens die Komponenten (A) bis (C) und einen Radikalbildner enthaltendes Gemisch durch Vermischen der Bestandteile herstellt,
- oder indem man ein bei Umgebungstemperatur stabiles, mindestens die Komponenten (A) bis (C) sowie einen Radikalbildner enthaltendes Gemisch mindestens auf die Härtungstemperatur erwärmt.

Beim oben beschriebenen Verpressen oder Verspritzen von Harzmatten oder von im Kneter hergestellten Formmassen arbeitet man im allgemeinen mit dauernd auf Härtungstemperatur befindlichen Formwerkzeugen. Bei Anwendung der Naßpreß- und der Injektionstechnik ist es auch möglich, die Formgebung bei tieferer Formtemperatur durchzuführen und die Härtung dann durch Erwärmen der Form in Gang zu bringen. In all diesen Fällen liegt erfindungsgemäß die Formtemperatur bei der Härtung zwischen 15°C und 100°C, vorzugsweise zwischen 20°C und 95°C, insbesondere zwischen 40°C und 80°C.

Das erfindungsgemäße Verfahren eignet sich hervorragend zur Herstellung von Formteilen mit hoher Maßgenauigkeit und fehlerfreien Oberflächen, wie sie z.B. in der Möbelindustrie (Konstruktionsteile aller Art wie Schranktüren) oder auf dem Automobilsektor (Karosserieteile wie Kotflügel, Motorhauben, Kofferraumdeckel) gebraucht werden.

Die Prozentangaben der nachfolgenden Beispiele bedeuten - mit Ausnahme der Schrumpfwerte - Gewichtsprozente; Teile sind Gewichtsteile.

## Beispiele

Als Komponente A wurden folgende ungesättigte Polyester eingesetzt:

UP1: Ungesättigter Polyester auf Basis Maleinsäurenanhydrid/Isophthalsäure/Propylenglykol-1,2/Dipropylenglykol (Molverhältnis 71:29:66:44) mit einer Säurezahl von 25, dessen 61 %ige styrolische Lösung eine Viskosität von 1.150 mPa.s bei 20°C aufwies. Der Molekulargewichtsfaktor betrug 296.

UP2: Ungesättigter Polyester auf Basis Maleinsäureanhydrid/Phthalsäureanhydrid/Propylenglykol-1,2/Dipropylenglykol (Molverhältnis 66:34:49:59) mit einer Säurezahl von 22 und einer Viskosität von 500 mPa.s bei 20°C in 62 %iger styrolischer Lösung. Der Molekulargewichtsfaktor des Polyesters betrug 356.

UP3: Ungesättigter Polyester auf Basis Maleinsäureanhydrid/Phthalsäureanhydrid/Propylenglykol-1,2/Di-propylenglykol (Molverhältnis 83:17:82:26) mit einer Säurezahl von 22 und einer Viskosität von 1.500 mPa.s bei 20°C in 65 %iger styrolischer Lösung. Der Molekulargewichtsfaktor des Polyesters betrug 246.

UP4: Ungesättigter Polyester auf Basis Maleinsäureanhydrid/Bisphenol-A-di-($\beta$-hydroxy-ethyl)ether/$\beta$-Phenoxyethanol (Molverhältnis 100:87:17) mit einer Säurezahl von 19 und einer Viskosität von 3.200 mPa.s bei 20°C in 62 %iger styrolischer Lösung. Der Molekulargewichtsfaktor des Polyesters betrug 417.

UP5: Additionsprodukt aus 2 Mol Methacrylsäure und 1 Mol Bisphenol-A-diglycidylether. Der Molekulargewichtsfaktor betrug 256.

UP6: Veresterungsprodukt aus 2 Mol Methacrylsäure und 1 Mol Bisphenol-A-di-($\beta$-hydroxy-ethyl)-ether. Der Molekulargewichtsfaktor betrug 226.

Als Komponente B diente Styrol.

Als Komponente C wurden folgende Polyesterurethane eingesetzt:

EU1: Polyesterurethan gewonnen durch Umsetzung von 100 Teilen eines Hydroxylpolyesters aus Adipinsäure, Hexandiol-1,6 und Neopentylglykol (Molverhältnis Hexandiol/Neopentylglykol 11:6; OH-Zahl 67; Molekulargewicht 1.700) mit 1,5 Teilen Butandiol-1,4 und 18 Teilen des flüssigen Isomerengemischs aus 2,4'-und 4,4'-Diisocyanato-diphenylmethan.

EU2: Polyesterurethan aus 1 Mol eines Hydroxylpolyesters aus Adipinsäure, Butandiol-1,4, Hexandiol-1,6 (Molverhältnis Butan-/Hexandiol 7:3) und 0,995 Mol Hexamethylendiisocyanat.

EU3: Polyesterurethan, gewonnen durch Umsetzung eines Mols des Hydroxylpolyesters aus Adipinsäure, Hexandiol-1,6 und Neopentylglykol (Molverhältnis 100:77:45; Säurezahl 12, OH-Zahl 110) mit 0,12 Mol Butandiol-1,4 und 0,36 Mol Toluylendiisocyanat-2,4.

EU4: Polyesterurethan, gewonnen durch Umsetzung eines Mols des Hydroxylpolyesters aus Adipinsäure, Ethylenglykol und Propylenglykol-1,2 (Molverhältnis 100:40:62; Säurezahl 12, OH-Zahl

EP 0 247 429 B1

28) mit 0,025 Mol "Isophoron"-diisocyanat.

Beispiele 1 bis 15

In einer beheizbaren und evakuierbaren Stahlform zur Herstellung von planparallelen Platten der Größe 250 mm × 600 mm × 4 mm wurden Glasfasermatten in solcher Menge vorgelegt, daß der Glasgehalt der Platten nach der Härtung den Angaben in den einzelnen Beispielen entsprach. Fehlt eine solche Angabe, so betrug er 65 %. Man evakuierte auf 50 mbar, saugte das mit einem Dissolver vorgemischte, den Rezepturangaben in den Einzelbeispielen entsprechende Harz bis zur vollständigen Füllung der Form ein und heizte die Form nach Belüften bis zur Härtungstemperatur auf.

Unter Benzoylperoxidpaste wird eine 50 %ige Paste in Dibutylphthalat verstanden. Die als Schrumpfung bezeichneten Werte bedeuten die Dimensionsänderung beim Härten, gemessen als Maßunterschied zwischen kalter Form und kaltem Fertigteil in Prozent, wobei positive Zahlen einen Schrumpf, negative eine Ausdehnung anzeigen. Die Plattenoberfläche wurde visuell hinsichtlich Glanz und Glätte mit Noten bewertet (1 = sehr gut, 6 = ungenügend).

Beispiel 1

Die Formmasse bestand aus 73 Teilen einer 55 %igen styrolischen Lösung von UP1, 27 Teilen einer 78 %igen styrolischen Lösung von EU4 und 2 Teilen Benzoylperoxidpaste. Man härtete 2 Stunden bei 80° C. Die gehärtete Platte zeigte einen Schrumpf von -0,08 %. Oberfläche: Bewertung 2.

Beispiel 2 (Vergleichsbeispiel)

Die Formmasse bestand aus 100 Teilen einer 55 %igen styrolischen Lösung von UP1 und 2 Teilen Benzoylperoxidpaste. Man härtete wie in Beispiel 1; der Schrumpf betrug +0,04 %. Oberfläche: Bewertung 4.

Beispiel 3

Die Formmasse bestand aus 68 Teilen einer 62 %igen styrolischen Lösung von UP2, 32 Teilen einer 59 %igen styrolischen Lösung von EU4, 1 Teil 80 %iger Cumolhydroperoxidlösung und 0,62 Teilen einer butanolischen Vanadiummonobutylphosphitlösung mit einem Vanadiumgehalt von 0,25 g/100 ml. Der Glasfasergehalt betrug 33 %. Man härtete 60 Minuten bei 60° C. Die gehärtete Platte zeigte einen Schrumpf von ± 0 %. Oberfläche: Bewertung 2.

Beispiel 4 (Vergleichsbeispiel)

Die Formmase bestand aus 100 Teilen einer 62 %igen styrolischen Lösung von UP2, Härter und Beschleuniger wie in Beispiel 3. Man ging vor wie in Beispiel 3; der Schrumpf betrug +0,11 %. Oberfläche: Bewertung 4.

Beispiel 5

Die Formmasse bestand aus 68 Teilen einer 60,2 %igen styrolischen Lösung von UP3, 32 Teilen einer 59 %igen styrolischen Lösung von EU4, 1 Teil einer 80 %igen Cumolhydroperoxidlösung und 0,62 Teilen Vanadiumbeschleunigerlösung aus Beispiel 3. Der Glasfasergehalt betrug 32 %. Man härtete 60 Minuten lang bei 60° C und erhielt Platten mit einem Schrumpf von -0,02 %.

Beispiel 6 (Vergleichsbeispiel)

Die Formmasse bestand aus 100 Teilen einer 60,2 %igen styrolischen Lösung von UP3, Härter und Beschleuniger wie in Beispiel 5. Man ging vor wie in Beispiel 5; der Schrumpf betrug +0,14 %.

Beispiel 7

Die Formmasse bestand aus 70 Teilen einer 57 %igen styrolischen Lösung von UP4, 30 Teilen einer 50 %igen styrolischen Lösung von EU3 und 2 Teilen Benzoylperoxidpaste. Man härtete 2 Stunden lang bei

7

80° C. Die gehärteten Platten zeigten einen Schrumpf von -0,04 %.

Beispiel 8 (Vergleichsbeispiel)

Die Formmasse bestand aus 100 Teilen einer 57 %igen styrolischen Lösung von UP4 und 2 Teilen Benzoylperoxidpaste. Härtung wie in Beispiel 7; der Schrumpf betrug +0,06 %.

Beispiel 9

Die Formmasse bestand aus 80 Teilen einer 50 %igen styrolischen Lösung von UP6, 20 Teilen einer 45 %igen styrolischen Lösung von EU1 und 2 Teilen Benzoylperoxidpaste. Man härtete 2 Stunden bei 80° C und erhielt einen Schrumpf von -0,06 %.

Beispiel 10 (Vergleichsbeispiel)

Die Formmasse bestand aus 100 Teilen einer 50 %igen styrolischen Lösung von UP6 und 2 Teilen Bezoylperoxidpaste. Man härtete wie in Beispiel 9; der Schrumpf betrug +0,06 %.

Beispiel 11

Die Formmasse bestand aus 80 Teilen einer 50 %igen styrolischen Lösung von UP5, 20 Teilen einer 45 %igen styrolischen Lösung von EU1 und 2 Teilen Benzoylperoxidpaste. Man härtete 150 Minuten bei 90° C und erhielt Platten mit einem Schrumpf von -0,02 %.

Beispiel 12

Man verfuhr wie in Beispiel 11 mit der Abweichung, daß EU1 gegen die gleiche Menge EU2 ausgetauscht wurde und daß man 2 Stunden lang bei 80° C härtete. Der Schrumpf betrug -0,04 %. Oberfläche: Bewertung 1,5.

Beispiel 13 (Vergleichsbeispiel)

Die Formmasse bestand aus 100 Teilen einer 50 %igen Lösung von UP5 in Styrol. Härter und Härtungsbedingungen waren die gleichen wie in Beispiel 12. Der Schrumpf betrug +0,02 %. Oberfläche: Bewertung 5,5.

Beispiel 14

Beispiel 5 wurde wiederholt mit der Abwandlung, daß die Härtungstemperatur 45° C betrug. Man erhielt Platten mit einem Schrumpf von 0,01 %. Oberfläche: Bewertung 1,75.

Beispiel 15

Beispiel 5 wurde wiederholt mit der Abwandlung, daß bei Raumtemperatur (23° C) gehärtet wurde. Man erhielt Platten mit einem Schrumpf von -0,02%. Oberfläche: Bewertung 1,75.

Beispiele 16 und 17 (Vergleichsbeispiel)

Man stellte nach den üblichen Methoden der Harzmatten-(SMC)-Technologie (wie z.B. beschrieben im Kunststoff-Handbuch, Band VIII: Polyester, Herausgeber: R. Vieweg, L. Goerden, München 1973, S. 484f.) zwei Harzmatten - erfindungsgemäße Matte und Vergleichsmatte - her, wobei die folgenden Rezepturen zur Anwendung kamen:

|  | Beispiel 16 [Gew.-Teile] | Beispiel 17 [Gew.-Teile] |
|---|---|---|
| 60,2 %ige styrolische Lösung von UP3 | 68 | 100 |
| 59 %ige styrol. Lsg. von EU4 | 32 | - |
| 40 %ige styrol. PVAc-Lsg. | 10 | - |
| p-Benzochinon, 10 %ige styrol. Lsg. | 0,2 | 0,2 |
| Dimyristyl-peroxydicarbonat | 0,75 | 0,75 |
| t-Butyl-per-2-ethylhexanoat | 0,75 | 0,75 |
| Zinkstearat | 4 | 4 |
| Kreide | 150 | 150 |
| 35 %ige MgO-Paste in einem monomer-freien Polyesterharz nach DE-OS 27 31 320, Harz 2 | 2,6 | 2,6 |

Die Komponenten wurden bis auf die MgO-Paste und die Peroxide zunächst innig mit einem Dissolver homogenisiert. Nach Abkühlen auf 18°C mischte man die restlichen Bestandteile mit einem Blattrührer unter. Die SMC-Anlage wurde mit einem Rakelspalt von 1 mm und einer Geschwindigkeit von 2,3 m/min gefahren. Das Flächengewicht der Matte betrug 3,2 kg/m$^2$, der Glasfasergehalt 25 %, die Schnittlänge der Glasfasern 25 mm.

Man ließ 5 Tage bei 18°C eindicken und verpreßte dann zu 2 mm starken Platten im Format 300 mm x 300 mm. Hierbei betrug die Temperatur der oberen Formhälfte 80°C, die der unteren Formhälfte 70°C, der Preßdruck innerhalb der Form 70 bar.

Die Rezeptur nach Beispiel 16 ergab verzugsfreie Teile mit -0,02 % Schrumpf (Oberfläche: Bewertung 2), die nach Beispiel 17 stark verzogene Teile mit +0,23 % Schrumpf (Oberfläche: Bewertung 4,5).

Beispiele 18 und 19 (Vergleichsbeispiel)

Nach der Methode der Naßpreßtechnik (wie z.B. beschrieben im Kunststoff-Handbuch, Band VIII: Polyester, Herausgeber: R. Vieweg, L. Goerden, München 1973) wurde eine 9,8 kg schwere PKW-Motorhaube hergestellt. Die beiden folgenden Rezepturen kamen zur Anwendung, wobei Beispiel 18 der Erfindung entspricht und Beispiel 19 zum Vergleich dient:

| | Beispiel 18 [Gew.-Teile] | Beispiel 19 (Vergleichsbeispiel) [Gew.-Teile] |
|---|---|---|
| 60,2 %ige styrolische Lösung von UP3 | 68 | 100 |
| 59 %ige styrol. Lsg. von EU4 | 32 | - |
| Polyvinylacetat, 40 %ig in Styrol | 10 | - |
| Kreide | 45 | - |
| Zinkstearat | 2 | 2 |
| Acetylacetonperoxidlösung[1] | 2 | 2 |
| Cobalt-Amin-Mischbeschleuniger[2] | 1 | 1 |
| Inhibitor[3] | 0,3 | 0,3 |

[1] in Phosphorsäureester

[2] Lösung von Cobaltoctoat (2 % Metallgehalt) und Dimethylanilin in Dioctylphthalat

[3] 10%-ige Lösung von Alkylphenol in Styrol

Die Formtemperatur beim Verpressen betrug 65° C, der Preßdruck in der Form 3 bar, die Preßzeit 8 Minuten. Der Glasfasergehalt der Teile betrug 30 %; zum Einsatz gelangte eine Endlosmatte mit einem Flächengewicht von 450 g/m².

Der visuelle Vergleich beider Formteile erbrachte die folgenden Befunde: Das nach Beispiel 18 gefertigte Teil hatte eine glatte Oberfläche, war verzugsfrei und bot nach dem Lackieren beim Abspiegeln ein wellenfreies Bild (Bewertung 2). Das Teil nach Beispiel 19 hatte eine unruhige Oberfläche (Abbildung der Glasfaserstruktur) und war stark verzogen. Die lackierte Oberfläche zeigte beim Abspiegeln deutliche Wellen (Bewertung 4,5).

**Patentansprüche**

1. Verfahren zur Herstellung schrumpf- und verzugsarmer Formkörper durch Härtung von Formmassen auf Basis ungesättigter Polyester, die als Harzkomponente im wesentlichen

   A) 20 bis 70 gew.-% α,β-ethylenisch ungesättigten Polyester,
   B) 20 bis 55 gew.-% mit A copolymerisierbares Monomer und
   C) 8 bis 25 gew.-% schwundverminderndes Polymer enthalten, wobei, das Polymer C ein Polyesterurethan ohne radikalisch polymerisierbare Doppelbindungen mit 0,05 bis 0,8 Äquivalenten Urethangruppen pro 100 g Polyesterurethan C ist,
   wobei, sich die Prozentangaben auf die Summe A + B + C beziehen,
   dadurch gekennzeichnet, daß der Polyester A einen Molekulargewichtsfaktor von 210 bis 450 besitzt, und man die Formmasse bei einer Formtemperatur unter 100° C verarbeitet.

2. Verfahren nach Anspruch 1, dadurch gekennzeichnet, daß der Polyester A einen Molekulargewichtsfaktor von 235 bis 420 besitzt.

3. Verfahren nach Ansprüchen 1 und 2, dadurch gekennzeichnet, daß das Polyesterurethan C 0,1 bis 0,3 Äquivalente Urethangruppen pro 100 g Polyesterurethan enthält.

4. Verfahren nach Ansprüchen 1 bis 3, dadurch gekennzeichnet, daß man die Formmasse bei einer Formtemperatur zwischen 20 und 95° C verarbeitet.

**5.** Verfahren nach Ansprüchen 1 bis 3, dadurch gekennzeichnet, daß man die Formmasse bei einer Formtemperatur zwischen 40°C und 80°C verarbeitet.

## Claims

**1.** Process for the manufacture of low-shrinkage, low-warp mouldings by curing moulding compounds based on unsaturated polyesters, which contain as resin components essentially

A) 20 to 70 weight % $\alpha,\beta$-ethylenically unsaturated polyester,
B) 20 to 55 weight % monomer copolymerizable with A and
C) 8 to 25 weight % shrinkage-reducing polymer, the polymer C being a polyester urethane without double bonds polymerizable by radicals and with 0.05 to 0.8 equivalents of urethane groups per 100 g polyester urethane C,

the percentages being related to the sum A + B + C, characterized in that the polyester A has a molecular weight factor of 210 to 450 and that the moulding compound is processed at a mould temperature below 100 °C.

**2.** Process according to Claim 1, characterized in that the polyester A has a molecular weight factor of 235 to 420.

**3.** Process according to Claims 1 and 2, characterized in that the polyester urethane C contains 0.1 to 0.3 equivalent of urethane groups per 100 g polyester urethane.

**4.** Process according to Claims 1 to 3, characterized in that the moulding compound is processed at a mould temperature between 20 and 95 °C.

**5.** Process according to Claims 1 to 3, characterized in that the moulding compound is processed at a mould temperature between 40 and 80 °C.

## Revendications

**1.** Procédé de préparation d'objets moulés à faible retrait par durcissement de masses moulées à base de polyester insaturé qui comprennent comme composant de résine essentiellement
A) 20 à 70% en poids de polyester $\alpha,\beta$éthyléniquement insaturé,
B) 20 à 55% en poids de monomère A copolymérisable, et
C) 8 à 25% en poids de polymère diminuant le retrait, le polymère C étant un polyesteruréthane sans doubles liaisons polymérisables avec 0,05 à 0,8 équivalents en groupes uréthanes pour 100 g de polyesteruréthane C,
les données en pourcents se rapportant à la somme A + B + C, caractérisé en ce que le polyester A a un facteur de poids moléculaire de 210 à 450, de préférence de 235 à 420, et qu'on transforme la masse moulée à une température de moulage inférieure à 100°C.

**2.** Procédé selon la revendication 1, caractérisé en ce que le polyester A Possède un facteur de poids moléculaire de 235 à 420.

**3.** Procédé selon les revendications 1 et 2, caractérisé en ce que le polyesteruréthane C comprend 0,1 à 0,3 équivalent en groupes uréthane par 100 g de polyesteruréthane.

**4.** Procédé selon les revendications 1 à 3, caractérisé en ce qu'on transforme la masse moulée à une température de moulage comprise entre 20 et 95°C.

**5.** Procédé selon les revendications 1 à 3, caractérisé en ce qu'on transforme la masse moulée à une température de moule comprise entre 40°C et 80°C.